# EUROPÄISCHE PATENTSCHRIFT

(11) **EP 3 790 370 B1**
(45) Veröffentlichungstag und Bekanntmachung des Hinweises auf die Patenterteilung: **16.11.2022**
(21) Anmeldenummer: 19726895.6
(22) Anmeldetag: 09.05.2019
(51) Int. Cl.: A01C 5/06, A01C 7/06, A01C 7/20

(54) **SÄMASCHINE MIT TIEFENFÜHRUNGSMITTEL AM DÜNGERSCHAR**
SOWING MACHINE HAVING A DEPTH GUIDE MEANS ON THE FERTILIZER PLACEMENT UNIT
SEMOIR DOTÉ D'UN MOYEN DE JAUGE SUR LE SOC D'ENGRAIS

(30) Priorität: 09.05.2018 DE 102018111147
(43) Veröffentlichungstag der Anmeldung: 17.03.2021
(73) Patentinhaber: Lemken GmbH & Co KG, 46519 Alpen (DE)
(72) Erfinder: BERGERFURTH, Dennis, 46459 Rees (DE); GOTZEN, Christian, 41751 Viersen (DE); GEBBEKEN, Martin, 46519 Alpen (DE)
(86) Internationale Anmeldenummer: PCT/DE2019/100416
(87) Internationale Veröffentlichungsnummer: WO 2019/214781

(56) Entgegenhaltungen:
- DE-A1-102013 111 355
- US-A1- 2014 230 704
- US-A1- 2017 215 334
- US-A1- 2017 318 727

## Beschreibung

Die vorliegende Erfindung bezieht sich auf eine Sämaschine mit einem Rahmen, mit dem mindestens ein Säschar und ein dem Säschar in einer Arbeitsrichtung vorgeordnetes Düngerschar verbunden sind, wobei dem Säschar und dem Düngerschar jeweils ein Tiefenführungsmittel zugeordnet sind.

Eine gattungsgemäße Sämaschine ist aus der Schrift DE 10 2013 111 357 B4 sowie aus DE 10 2013 111355 A1 bekannt. Dort ist eine kombinierte Anordnung von Düngerscharen und Säscharen gezeigt, mit denen in einem Arbeitsgang Dünger und Saatgut in den Boden eingebracht werden können. Die Schriften US 2014 230 704 A1 sowie US 2017 021 5334 A1 zeigen ein beweglich aufgehängtes Einzelkornsäaggregat mit davor seitlich und längs versetzen Düngeschar. Die Offenlegung US 2017 031 8727 A1 zeigt eine mehrbalkige Sämaschine mit versetzt an den Balken angeordneten Scharen mit Tiefenführungsrädern.

Als nachteilig hat sich die lange Bauform sowie das hohe Gewicht der Baugruppe erwiesen. Auch ist die Tiefenführung des Düngerschars nicht optimal.

Es ist die Aufgabe der vorliegenden Erfindung, die Funktion der Sämaschine zu verbessern.

Die Aufgabe wird für eine gattungsgemäße Sämaschine gemäß Anspruch 1 gelöst, indem zumindest an einer Seite des Düngerschars ein Tiefenführungsmittel seitlich so neben dem Düngerschar angeordnet ist, dass aus einer Richtung quer zur Arbeitsrichtung gesehen zumindest dessen hälftige Hüllfläche die Hüllfläche des Düngerschars überschneidet, und das Tiefenführungsmittel ein in den Boden eindringendes Reihenvorformungs- und Rückverfestigungsmittel aufweist, das quer zur Arbeitsrichtung gesehen zum Düngerschar so versetzt angeordnet ist, dass in dessen Spur das nachfolgende Säschar den Boden einschneidet und die Särille formt.

Indem zumindest die Hälfte der Hüllfläche des Tiefenführungsmittels die Hüllfläche des Düngerschars überschneidet, wird eine insgesamt verkürzte Bauform erreicht. Dadurch wird das Gewicht der Baugruppe für das Düngerschar insgesamt verringert. Insbesondere wird aber auch die Tiefenführung des Düngerschars verbessert, indem der Abstand zwischen dem Düngerschar und dem zugehörigen Tiefenführungsmittel in Arbeitsrichtung gesehen verringert wird. Veränderungen in der Bodenkontur, denen das Tiefenführungsmittel folgt, werden wegen des geringeren Abstands des Tiefenführungsmittels vom Düngerschar in Arbeitsrichtung gesehen ohne oder zumindest mit nur einer ganz geringen zeitlichen Verzögerung auf das Düngerschar übertragen. Die Tiefenablage des Düngers hält dadurch gegenüber der Bodenoberfläche auch bei Unebenheiten ein genaues gewünschtes Maß ein.

Wenn hier von einer Überschneidung der Hüllfläche des Düngerschars mit der Überschneidung der Hüllfläche des Tiefenführungsmittels um mehr als die Hälfte die Rede ist, so bezieht sich die Mengenangabe auf die normalen Betriebszustände, mit denen die Sämaschine betrieben wird. Außergewöhnliche Schwenkstellungen des Tiefenführungsmittels und/oder des Düngerschars, die zwar technisch möglich sein könnten, im praktischen Einsatz aber nur eine geringe oder gar keine Bedeutung haben, können bei der Umsetzung der erfinderischen Lehre außer Betracht bleiben.

Schon durch die Anordnung des Tiefenführungsmittels auf nur einer Seite eines Düngerschars kann die vom Düngerschar aufgerissene Saatrille wieder so vorgeformt und rückverdichtet werden, dass sich dabei eine vom nachfolgenden Säschar gut optimierbare Saatrille ausbildet. Das Tiefenführungsmittel sorgt unmittelbar bei der Düngerablage dafür, dass der zunächst aufgerissene und für die Düngerablage lockere Boden für das nachfolgende Saatgut wieder gut rückverfestigt wird, so dass die anschließende Saatgutablage durch das Säschar in einem optimal vorbereiteten Boden erfolgen kann.

Die Hüllfläche des Tiefenführungsmittels kann die Hüllfläche des Düngerschars auch mehr als hälftig oder sogar mit seiner gesamten Hüllfläche überschneiden. Die Hüllfläche des Düngerschars entspricht dabei der Fläche des Scheibenschars, das ein Bestandteil des Düngerschars ist. Das Düngerschar kann als Einzel- oder Doppelscheibenschar ausgebildet sein. Je größer die Überschneidung ist, umso direkter kann das Düngerschar in seiner Arbeitshöhe an Veränderungen der Bodenkontur durch das Tiefenführungsmittel angepasst werden.

Die optimale Bodenvorverfestigung in der Saatrille nach dem Einbringen des Düngers ist aus pflanzenbaulicher Sicht wichtig. Die Kapillarwirkung des Bodens, über die Feuchtigkeit aus tieferen Bodenhorizonten an das Saatgut herangeführt wird, würde ohne eine ausreichende Bodenvorverfestigung nicht funktionieren, weil die Kapillarwirkung in einem zu locker geschichteten Boden zusammenbricht. Indem die Bodenvorverfestigung in die Nähe des vom Düngerschar abgegebenen Düngers gebracht wird, können nicht nur die Feuchtigkeit, sondern auch die Nährstoffe aus dem Dünger über die wegen der wiederhergestellten Kapillarwirkung im Boden aufsteigenden Feuchtigkeit gut an das Saatgut herangebracht werden.

Bei höheren Fahrgeschwindigkeiten führt die vorgeschlagene Anordnung des Tiefenführungsmittels dazu, dass vom Düngerschar und dem Tiefenführungsmittel weniger Erde seitlich wegspritzt und dadurch eine ebenere Bodenfläche und ein gerader Saathorizont entsteht. Da sich das Düngerschar und die seitlich davon angeordneten Tiefenführungsmittel in seitlicher Richtung zumindest hälftig überdecken, kann im Überdeckungsbereich nicht mehr so viel Erde zur Seite weggeschleudert werden.

Das Tiefenführungsmittel weist ein in den Boden eindringendes Reihenvorformungs- und Rückverfestigungsmittel auf, das quer zur Arbeitsrichtung gesehen zum Düngerschar so versetzt angeordnet ist, dass in dessen Spur das nachfolgende Säschar den Boden einschneidet und die Särille formt. Mit dem in den Boden eindringenden Reihenvorformungs- und Rückverfestigungsmittel ist das Tiefenführungsmittel funktional nicht nur auf die Bodenabstützung des Düngerschars beschränkt, sondern es wird zusätzlich dafür eingesetzt, den Boden im Bereich der nachfolgend vom Säschar ergänzend bearbeiteten Saatrille für die Ablage des Saatgutes vorzuformen und vorzuverdichten. Indem die Reihenvorformungs- und Rückverfestigungsmittel und das nachfolgende Säschar räumlich spurgenau folgend zueinander angeordnet sind, ist die Rückverfestigung und Reihenformung auf identische Bodenbereiche beschränkt, so dass die Bearbeitung von Bodenbereichen vermieden wird, die für die Saatgutablage unbedeutend sind.

Durch die Kombination der Merkmale, wonach sich die Hüllflächen des Tiefenführungsmittels und des Düngerschars zumindest hälftig überschneiden und das dem Düngerschar zugeordnete Tiefenführungsmittel räumlich so angeordnet ist, dass es das Saatbett für das nachfolgende Säschar vorverdichtet, ergibt sich eine sehr kompakte und effektive Anordnung, mit der eine verbesserte Saatgutausbringung mit einer optimalen Höhenführung des Düngerschars kombiniert wird.

Nach einer Ausgestaltung der Erfindung ist an beiden Seiten des Düngerschars ein Tiefenführungsmittel angeordnet. Durch die auf beiden Seiten des Düngerschars angeordneten Tiefenführungsmittel ist die Vorbereitung des Bodens auf die nachfolgende Saatgutablage auch in Querrichtung noch gleichmäßiger, als das mit nur einem dem Säschar auf einer Seite zugeordneten Tiefenführungsmittel möglich ist. Die Rückverdichtung des vom Säschar aufgerissenen Bodens und die Vorbereitung der Saatrille für das nachfolgende Säschar können dadurch auf beiden Seiten des Säschars gleich gut erfolgen.

Nach einer Ausgestaltung der Erfindung handelt es sich bei dem oder den dem Düngerschar zugeordneten Tiefenführungsmitteln um eines oder mehrere Räder.

Bei der Verwendung von Rädern als Tiefenführungsmittel fällt der Reibungswiderstand aus dem Bodenkontakt der Tiefenführungsmittel nahezu ganz weg. Zudem wird durch das Abrollen der Räder über den Boden der Verschleiß der Tiefenführungsmittel reduziert. Räder können außerdem eventuelle Hindernisse im oder auf dem Boden besser überrollen, wodurch das Risiko von Beschädigungen am Düngerschar und dem Tiefenführungsmittel reduziert ist. Die rollenden Räder bewirken zudem eine gute Rückverfestigung des Bodens.

Nach einer Ausgestaltung der Erfindung handelt es sich bei den Rädern um ein Speichenrad oder Vollrad. Bei einem Vollrad vermindert sich das seitliche Eindringen von Erdreich oder Fremdkörpern in den Raum zwischen dem Düngerschar und dem Radkörper. Das ist in bestimmten Bodenverhältnissen vorteilhaft. In anderen Bodenverhältnissen kann es allerdings vorteilhaft sein, wenn Erdreich oder Fremdkörper aus dem Zwischenraum leichter herausfallen können. Das ist beispielsweise bei Speichenrädern möglich oder bei Rädern, die Ausnehmungen in der Radschüssel aufweisen.

Nach einer Ausgestaltung der Erfindung ist am Außenumfang der Räder jeweils ein umlaufender Ring als Reihenvorformungs- und Rückverfestigungsmittel ausgebildet, der nach außen hin gegenüber einer zum Ring benachbarten umlaufenden Bodenaufstandsfläche des jeweiligen Rades vorsteht. Durch den umlaufenden Ring wird die Vorverfestigung des Bodens in der Druckrichtung des Ringes gesteigert und tiefer in den Boden eingebracht. Während die Bodenaufstandsfläche mehr oder weniger genau auf der Bodenfläche abrollt, dringt die äußere Umfangskontur des Rings in den Boden ein. Der Ring ermöglicht so eine gezielte Verfestigung des Bodens bis hinunter in den Bereich des Düngerschars hinein, weil ein solcher Ring bei einer entsprechenden Druckbeaufschlagung auch bis unter die Bodenoberfläche in den Boden eintauchen kann und dadurch die Vorverfestigung auch in tiefere Bodenschichten bringt. Andererseits können die benachbarten umlaufenden Bodenaufstandsflächen auf der Bodenoberfläche abrollen, wobei sie dabei weniger tief in den Boden eindringen oder tatsächlich nur auf der Bodenoberfläche abrollen und dadurch genau die Bodenkontur kopieren können. Durch den Ring kann die Verfestigung des Bodens also - je nach Querschnittsform des Rings und der Bodenaufstandsflächen - mehrstufig oder stufenlos bis in tiefere Regionen des Bodens bewirkt werden. Dabei ist es möglich, die Tiefen- und Breitenwirkung der Bodenvorverdichtung durch eine entsprechende Gestaltung der Querschnittsform des Ringes, der umlaufenden Bodenaufstandsfläche und der Flächenanteile des Ringes und der benachbarten umlaufenden Bodenaufstandsfläche an den Rädern auf eine gewünschte Weise zu gestalten. Durch die Querschnittsform des Ringes kann außerdem die Flankenform der im Bereich des Düngerschars gebildeten Saatrille geeignet gestaltet werden.

Nach einer Ausgestaltung der Erfindung sind die Drehachsen der Räder schräg zur Arbeitsrichtung angestellt, so dass sich in Arbeitsrichtung eine Pfeilung der Räder ergibt. Durch die Pfeilung der Räder ist es möglich, eine Saatrille für das nachfolgende Säschar aus dem Boden auszuformen und diese auch vorzuverdichten. Durch die Pfeilung der Räder und ihre Drehbewegung bei der Vorfahrt wird der Boden, der bei der Vorfahrt der Sämaschine an den Radkörper anstößt, zur Seite gedrückt und damit aus dem Wirkbereich des Düngerschars und des Säschars in eine Richtung quer zur Arbeitsrichtung weggeschoben. Insbesondere, wenn das Rad mit einem Ring versehen ist, wirkt die in Arbeitsrichtung stehende Flanke des Rings als eine Art Schild, der das von ihm erfasst Bodenmaterial der Pfeilkontur folgend schräg zur Seite wegschiebt. Bei einer derartigen Vorformung der Saatrille wird das Säschar bei seiner Formung der Saatrille teilweise entlastet und kann deshalb das Saatgut präziser in einer optimal vorverfestigten und vorgeformten Saatrille ablegen.

Nach einer Ausgestaltung der Erfindung entspricht der Anstellwinkel der Räder im Verhältnis zur Arbeitsrichtung dem Anstellwinkel, in dem die Scheiben des Säschars im Verhältnis zur Arbeitsrichtung angestellt sind. Bei dieser Ausbildung der Anstellwinkel gelingt es besonders gut, eine formfeste Saatrille zu schaffen, in die das Saatgut optimal abgelegt werden kann. Bei der doppelten Formung der Saatrille ergeben sich stabile Rillenflanken, ohne dass bei der Bildung und Verfestigung der Flanken der Saatrille Bodenmaterial in den Boden der Saatrille zurückrutschen kann. Daraus resultieren optimale Bedingungen für die Saatgutablage.

Nach einer Ausgestaltung der Erfindung sind die Drehachsen der Räder schräg zur vertikalen Richtung angestellt, wobei der Anstellwinkel der Räder in vertikaler Richtung bevorzugt dem Anstellwinkel entspricht, in dem die Scheiben des Säschars im Verhältnis zur vertikalen Richtung angestellt sind. Diese Ausgestaltung führt dazu, dass der Kontaktpunkt der Räder mit der Bodenoberfläche etwa bei 7 bis 8 Uhr des Rades liegt. Die Schrägstellung der Räder auch in vertikaler Richtung führt dazu, dass die Räder im Kontaktbereich Bodenmaterial gut schräg zur Seite schieben können. Die seitlichen Flanken der Saatrille sind dadurch mit einer schrägen Böschung versehen, die dabei gut vorverdichtet wird, um eine perfekte Saatrille zu bilden. Durch die Schrägstellung der Räder in vertikaler Richtung können die Räder leichter in den Boden eindringen und dabei Bodenmaterial leichter zur Seite abfördern. Durch die Schrägstellung wird die Abförderung zur Seite unterstützt, wobei das Bodenmaterial nicht unnötig hoch aufgeworfen wird. Das seitlich abgeförderte Bodenmaterial neigt weniger dazu, wieder in die Saatrille zurück zu rutschen.

Nach einer Ausgestaltung der Erfindung weisen das oder die dem Düngerschar zugeordneten Tiefenführungsmittel im Bodenkontaktbereich auf einer oder beiden Flankenseiten eine zur Vorfahrtrichtung schräg angestellte Streichfläche auf. Als Streichfläche kommen hier insbesondere die seitlichen Flanken des Tiefenführungsmittels in Betracht, die in Arbeitsrichtung weisen. Wenn als Tiefenführungsmittel ein Rad verwendet ist, können das die in Arbeitsrichtung geneigten Flanken des Rades oder eines an dem Rad ausgebildeten umfangseitigen Ringes sein. Die Streichflächen dienen dazu, den oberen Bodenhorizont anzuschneiden, das Bodenmaterial zu lösen und seitlich abzufördern. Um diese Aufgabe bestmöglich zu erfüllen, kann die Oberfläche der Streichfläche entsprechend ausgeformt sein. So können die Streichflächen gegenüber der Rotationsebene eines Rades angeschrägt sein, im Endbereich scharf ausgebildete Kanten aufweisen und aus einem Material hergestellt sein, das eine besondere Zähigkeit bei Fremdkörperkontakten aufweist, wie beispielsweise ein besonders gehärteter Stahl oder auch elastische Komponenten, die Kraftspitzen abzubauen vermögen.

Nach einer Ausgestaltung der Erfindung weisen die dem Düngerschar zugeordneten Tiefenführungsmittel im Bodenkontaktbereich Vorsprünge auf, die über die umgebenden Oberflächen hervorstehen. Bei den Vorsprüngen kann es sich um Keile in Dreiecks- oder Trapezform handeln, die über die umgebende Oberfläche hinaus bei einem Bodenkontakt tiefer in den Boden eindringen. Durch die damit einhergehende stärkere Verzahnung mit dem Boden können die Vorsprünge als Antrieb für die Drehbewegung der Räder dienen. Sie können sich über die komplette oder teilweise Tiefe der Ringe erstrecken. Die Vorsprünge können in gleichmäßigen oder unregelmäßigen Abständen über den Außenumfang der Räder verteilt angeordnet sein. Die Vorsprünge können sich auch in ihrer Form, Höhe und ihrem Material voneinander unterscheiden.

Nach einer Ausgestaltung der Erfindung weisen die Tiefenführungsmittel eine asymmetrische Querschnittsform auf. Durch die asymmetrische Querschnittsform der Tiefenführungsmittel können diese für die Funktion optimiert werden, die Furche des Saatbetts zu formen. Insbesondere können Ringe, die auf Rädern als Tiefenführungsmittel ausgebildet sind, eine asymmetrische Querschnittsform aufweisen. Dabei wird die in Arbeitsrichtung weisende Seite der Tiefenführungsmittel so gestaltet, dass das Bodenmaterial optimal angerissen, aufgelockert und zur Seite abgefördert wird. Auf der dem Düngerschar zugewandten Seite des Tiefenführungsmittels muss die Saatrille ausreichend geöffnet und lockeres Bodenmaterial beiseite geräumt sein. Je nach verwendeter Art und Zahl der Scharscheiben an dem Säschar und ihrer räumlichen Anordnung am Rahmen können dafür aber auch symmetrische Querschnittsformen eines oder beider Ringe sinnvoll sein.

Nach einer Ausgestaltung der Erfindung sind zumindest eine in der Arbeitsstellung am tiefsten in den Boden hineinreichende Kante der dem Düngerschar zugewandten Flanken der Tiefenführungsmittel und zumindest eine der am tiefsten in den Boden hinein reichenden Kanten der Scheiben des Säschars in einer Linie angeordnet, die zur Arbeitsrichtung parallel verläuft. Die Ausbildung der Saatrille durch die Tiefenführungsmittel am Düngerschar muss verfahrenstechnisch im Einklang stehen mit der Optimierung der Saatrille durch die Scheiben des Säschars, auch wenn es sich dabei um ein Doppelscheibenschar handelt, um die optimale Ablage des Saatgutes im Boden sicher zu stellen. Die Saatrille wird auf diese Weise im Wesentlichen vom Tiefenführungsmittel des Düngerschars vorgeformt, und die Doppelscheiben des Säschars müssen dann nur noch die Restausformung leisten. Hier ist ein optimales Arbeitsergebnis erzielbar, wenn die am tiefsten in den Boden hineinreichenden Kanten der dem Düngerschar zugewandten Flanken der Tiefenführungsmittel und die am tiefsten in den Boden hinein reichenden Kanten der Scheiben des Säschars in der vorgeschlagenen Weise in einer Linie angeordnet sind.

Nach einer Ausgestaltung der Erfindung sind die Tiefenführungsmittel ganz oder teilweise aus einem polymeren oder elastomeren Werkstoff hergestellt. So können beispielsweise die Laufflächen mit einem polymeren oder elastomeren Belag versehen sein, während der Ring und/oder an dem Ring ausgebildete Vorsprünge eine metallische Oberfläche aufweisen.

Nach einer Ausgestaltung der Erfindung sind die Tiefenführungsmittel allein oder mit dem Düngerschar gemeinsam gegenüber dem Rahmen schwenkbeweglich gelagert. Die schwenkbewegliche Lagerung ermöglicht eine der Bodenkontur folgende kontinuierliche individuelle Höhenanpassung der Tiefenführungsmittel, und zwar in einem Bereich geringer Höhenausschläge bevorzugt nur des Tiefenführungsmittels und in einem größeren Bereich von Höhenausschlägen auch mit dem dann damit verbundenem Düngerschar bei der Arbeit. Maßgeblich für die individuelle Höhenlage des Düngerschars ist dadurch nicht mehr allein die Lage des Rahmens, sondern insbesondere oder nur die Höhenführung durch das Tiefenführungsmittel. Dadurch kann der Dünger in einem zumindest annähernd gleich bleibenden Abstand zur Bodenoberfläche und damit auch zu dem nachfolgend eingebrachten Saatgut in den Boden eingebracht werden.

Nach einer Ausgestaltung der Erfindung sind die Schwenkbewegungen der Tiefenführungsmittel nach oben und/oder unten hin durch einen mechanischen Anschlag beschränkt. Der oder die Anschläge ermöglichen eine Höhenbewegung des Tiefenführungsmittels in einem von dem oder den Anschlägen begrenzten Rahmen, ohne dass dabei sofort das Düngerschar in seiner Höhenlage beeinflusst wird, wodurch das Düngerschar sehr ruhig in der Düngespur läuft. Durch den mechanischen Anschlag werden zu große Aufwärts- oder Abwärtsbewegungen des Düngerschars vermieden, die wiederum die Ablagequalität beeinträchtigen könnten. Erst wenn eine Höhenabweichung die durch die Anschläge gewährten Spielräume überschreitet, wird die Höhenauslenkung auf das Düngerschar übertragen.

Nach einer Ausgestaltung der Erfindung ist der mechanische Anschlag höhenverstellbar ausgebildet. Je nach Bodenbeschaffenheit und nach Art des Düngers und des Saatguts, das mit der Sämaschine ausgebracht wird, kann es erforderlich sein, die Höhenlage des Anschlags an die konkreten Bedingungen anzupassen, um ein optimales Arbeitsergebnis zu erzielen. Das ist mit dem höhenverstellbaren Anschlag möglich.

Nach einer Ausgestaltung der Erfindung sind die Tiefenführungsmittel in der Arbeitsstellung über einen Energiespeicher auf dem Boden gehalten. Als Energiespeicher kommen passive Systeme wie beispielsweise eine mechanische oder eine Elstomerfeder in Betracht, die beispielsweise gegen den Rahmen abgestützt ist und bei einer Einfederbewegung des Tiefenführungsmittels Energie aufnimmt, speichert und diese wieder abgibt, wenn das Tiefenführungsmittel wieder von der gespeicherten Energie angetrieben wieder ausfedert. Als Energiespeicher können aber auch hydraulische, pneumatische oder elektrische Systeme verwendet werden, die nach einer Ausgestaltung aktiv geregelt sein können. Hier kommen beispielsweise Hydraulikzylinder oder pneumatische Stellsysteme in Betracht, die von einem Druckspeicher mit Energie beaufschlagt werden. Auch über Elektromotoren kann ein Druck auf das Tiefenführungsmittel ausgeübt werden. Die Regelung erfolgt gegen das Gewicht des Rahmens, wenn der Rahmen der Sämaschine schwimmend gelagert ist. Wenn der Rahmen in einer gegebenen festen Arbeitsstellung am Traktor gehalten ist, erfolgt die Regelung auch gegen das Gewicht des Traktors. Bei wechselnd schweren Bodenverhältnissen kann der einwirkende Auflagedruck und die daraus resultierende Höhenlage des Düngerschars bedarfsgerecht während der laufenden Ausbringung des Düngers kontinuierlich angepasst werden.

Nach einer Ausgestaltung der Erfindung sind die aus dem Energiespeicher auf die Tiefenführungsmittel einwirkenden Kräfte mittels einer Einstellvorrichtung verstellbar. Mit der Einstellvorrichtung kann der Schardruck eingestellt werden, der auf das Düngerschar während des laufenden Betriebs einwirkt. Mit der Einstellvorrichtung kann eine Vorspannung manuell-mechanisch oder über eine Bedienvorrichtung an der Sämaschine oder über eine Fernbedienung, beispielsweise aus dem Traktor, auf einen gewünschten Wert eingestellt werden. Die Einstellvorrichtung kann aber auch sensorgesteuert einen bestimmten Schardruck und/oder eine bestimmte Höhenlage des Tiefenführungsmittels und damit des Düngerschars automatisiert über eine geeignete Software und eine von der Software gesteuerte Aktorik halten. Über die Einstellvorrichtung werden die aus dem Energiespeicher einwirkenden Kräfte an die jeweiligen Bodenverhältnisse und die gewünschte Ablagetiefe des Düngers angepasst.

Nach einer Ausgestaltung der Erfindung weist die Einstellvorrichtung eine Auswerteelektronik auf, die mit einer Sensorik verbunden ist, die aktuelle Höhenlagen des Düngerschars und/oder auf das Düngerschar einwirkende Kräfte misst, mittels einer geeigneten Software aus den übermittelten Sensordaten Stellgrößen zur Verstellung der Einstellvorrichtung ermittelt, und die mit Aktoren der Einstellvorrichtung verbunden ist, an die die Auswerteelektronik die ermittelten Stellgrößen als Regelgrößen übermittelt. Mit der Auswerteelektronik ist ein automatisierter Regelbetrieb möglich.

Nach einer Ausgestaltung der Erfindung ist das mit einem Tiefenführungsmittel verbundene Säschar in der Arbeitsstellung über einen Energiespeicher auf dem Boden gehalten, und der das Säschar auf dem Boden haltende Energiespeicher ist funktionsmäßig verbunden mit dem Energiespeicher, der das Düngerschar auf dem Boden hält.

Die funktionsmäßige Verbindung kann auf unterschiedliche Weise hergestellt werden.

So ist es möglich, die Energiespeicher, wenn sie als Hydraulikzylinder ausgebildet sind, parallel geschaltet mit einem Druckspeicher zu verbinden. Bei einer solchen Verschaltung wird der aus dem Druckspeicher erzeugte gleich bleibende Druck immer auf den Energiespeicher übertragen, der aktuell einen geringeren Gegendruck bekommt, so dass das daran angeschlossene Düngerschar oder Säschar dabei nach unten gedrückt und ausgefahren wird. Der dabei erfolgende Druckausgleich kann dazu führen, dass dabei auch das andere Dünger- oder Säschar entsprechend eingefahren wird, bis ein vollständiger Druckausgleich stattgefunden hat. Die parallele Verschaltung der Hydraulikzylinder gegen einen Druckspeicher wirkt so als eine Druckwaage, die den anstehenden Druck auf beide Energiespeicher stufenlos veränderlich je nach aktueller Anwendungssituation verteilt. Wenn sich der Gegendruck auf den Druckspeicher aus einem Energiespeicher erhöht, führt das dazu, dass das entsprechende Dünger- oder Säschar und der zugehörige Energiespeicher eingefahren und gegebenenfalls das andere Dünger- oder Säschar ausgefahren wird oder der Druck im Druckspeicher ansteigt. Bei gemessenen Druckanstiegen oder Druckabfällen im Druckspeicher kann dort auch der Druck erhöht oder abgesenkt werden, was sich unmittelbar auf den Druck auswirkt, der auf die angeschlossenen Energiespeicher des Dünger- und Säschars einwirkt und deren Eindringverhalten in den Boden unmittelbar beeinflusst.

Ein schneller Druckanstieg im Druckspeicher, der aus einer Einfederbewegung des Düngerschars herrührt und nicht durch eine unmittelbare Ausfahrbewegung des Säschars kompensiert werden kann, indiziert einen möglichen Kontakt mit einem Hindernis, der auch bei dem Säschar eintreten und dort einen Anfahrschaden verursachen kann. Um das Schadensrisiko zu vermindern, kann der Druckanstieg dazu genutzt werden, die Druckvorspannung für das Dünger- und das Säschar schlagartig zu vermindern, um Schäden an beiden Komponenten zu vermeiden oder zumindest zu verringern. Die schnelle Druckverminderung im Druckspeicher entspricht einer Art Überlastsicherung, die das Dünger- und das Säschar gegen mögliche Schäden schützt oder diese zumindest verringert.

Genauso ist es möglich, den Druck im Druckspeicher für das Dünger- und das Säschar gleichzeitig zu erhöhen, wenn beispielsweise erkannt wird, dass diese Elemente nicht tief genug in den Boden eindringen, weil dieser zu hart oder zu trocken ist. Diese Bedingung kann durch eine entsprechende Sensorik erkannt werden, oder es erfolgt eine entsprechende Einstellung durch einen Bediener. Die Bedienung der Sämaschine wird vereinfacht, wenn entsprechende Stellvorgaben für das Dünger- und das Säschar gemeinsam gegeben werden können.

Anstelle von Energiespeichern in Gestalt hydraulisch betätigter Systeme können entsprechende Funktionen natürlich auch durch andere energetische Systeme, wie pneumatische oder elektrische Systeme, mit den entsprechenden zugehörigen Systemkomponenten dargestellt werden. Es ist auch ein gemischter Einsatz solcher Systeme möglich, wie beispielsweise der kombinierte Einsatz von Hydraulikzylindern mit einem hydraulischen System mit elektrisch angetriebenen Servomotoren aus dem elektrischen System, jeweils zur Erfüllung geeigneter Teilaufgaben.

Nach einer Ausgestaltung der Erfindung sind die Energiespeicher für das Düngerschar und das Säschar gemeinsam verstellbar. Die gemeinsame Verstellung kann beispielsweise der Umsetzung teilflächenspezifischer Vorgaben dienen. So können die Energiespeicher gemeinsam betätigt werden, um das Dünger- und das Säschar für die zugehörige Saatrille zeitgleich oder kurz nacheinander auszuheben, um am Vorgewende oder einer Kehrfurche bereits gesäte Flächen nicht nochmals zu säen. Als gemeinsame Betätigung kommt auch das gemeinsame Anziehen oder Ausfahren von doppelt wirkenden Hydraulikzylindern für das Dünger- und das Säschar in Betracht, wenn die Sämaschine für den Straßentransport zusammen- oder auseinandergeklappt wird. Durch die gemeinsame Betätigungsmöglichkeit der Energiespeicher wird die Bedienung und Handhabung der Sämaschine deutlich vereinfacht.

Nach einer Ausgestaltung der Erfindung sind ein oder mehrere Düngerschare und/oder Säschare vom jeweiligen Energiespeicher teilflächenspezifisch aushebbar. Durch das teilflächenspezifische Ausheben können Überlappungen von Legespuren in der Aussaat vermieden werden. Indem die vorhandenen Energiespeicher für das Ausheben benutzt werden, ist zusätzliche Aushebetechnik verzichtbar. Die jeweiligen Energiespeicher werden bei Bedarf bevorzugt von einer Steuerung angesprochen, um die betreffenden Dünger- und/oder Säschare auszuheben oder wieder abzusenken.

Nach einer Ausgestaltung der Erfindung sind in der Transportstellung der Sämaschine ein oder mehrere Düngerschare und/oder Säschare von den zugehörigen Energiespeichern eingezogen. Die Energiespeicher können auch dazu benutzt werden, die Dünger- und/oder Säschare bei der Verringerung der Arbeitsbreite der Sämaschine zur Transportbreite räumlich so zu verlagern, dass sich eine geringere Transportbreite der Sämaschine ergibt.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Sämaschine mit Düngerschar und Säschar in einer Seitenansicht,
- Fig. 2:: ein Düngerschar in einer vergrößerten Seitenansicht,
- Fig. 3:: eine Ansicht auf ein Düngerschar von unten,
- Fig. 4:: eine Ansicht auf das in Fig. 2 gezeigte Düngerschar mit einem Speichenrad,
- Fig. 5:: eine Ansicht von unten auf eine Kombination eines Düngerschars mit einem Säschar,
- Fig. 6:: eine Ausgestaltung der Sämaschine in einer Seitenansicht, in der Düngerschare und Säschare jeweils seitlich versetzt hintereinander angeordnet sind, und
- Fig. 7:: die in Fig. 6 gezeigte Anordnung aus einer Ansicht von unten.

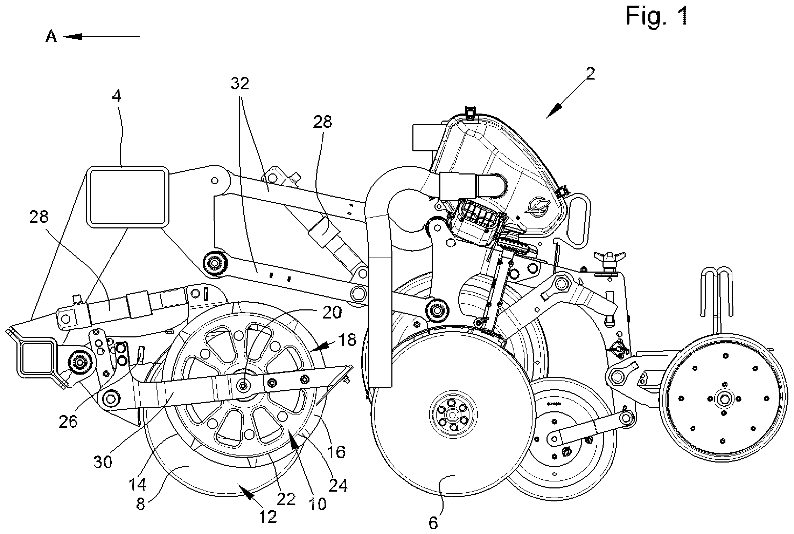

In Fig. 1 ist eine Sämaschine 2 gezeigt, an deren Rahmen ein Säschar 6 und ein Düngerschar 8 befestigt sind. Die Sämaschine 2 wird in Arbeitsrichtung A über das Feld bewegt. Dabei legt zunächst das Düngerschar 8 einen Dünger im Boden ab. Das nachfolgende Säschar 6 legt dann das Saatgut darüber und/oder daneben. Die Kombination des Düngerschars 8 mit dem Säschar 6 reißt also bei der Überfahrt über das Feld eine Saatrille auf, formt diese aus, bringt darin den Dünger ein, verdichtet den Boden wieder vor, legt dann das Saatgut in der Saatrille ab, schließt die Saatrille und drückt den Boden im Bereich der geschlossenen Saatrille wieder an.

Damit schon das Düngerschar 8 den Dünger ausreichend tief und genau in den Boden einbringen kann, ist das Düngerschar 8 im Ausführungsbeispiel mit Doppelscheiben ausgestattet, die den Boden in ihrem Wirkbereich aufbrechen und eine Rille schaffen, in die der Dünger abgelegt werden kann. Die Doppelscheiben des Düngerschars 8 verfügen in der Seitenansicht über eine Hüllfläche 12, die vom Kreisumfang des Scheibenschars in der Seitenansicht definiert ist.

Im Ausführungsbeispiel ist das Tiefenführungsmittel als Rad 14 ausgebildet. Das Rad 14 verfügt über eine Hüllfläche 10, die vom Umfang des Rades 14 bestimmt ist.

In der Seitenansicht ist gut erkennbar, dass die Hüllfläche 10 des Rades 14 die Hüllfläche 12 des Düngerschars 8 in der gezeigten Schwenklage um mehr als die Hälfte - im Ausführungsbeispiel ca. zu 80 % - überschneidet.

Indem quer zur Arbeitsrichtung A gesehen das Rad 14 als ein Ausführungsbeispiel eines Tiefenführungsmittels sowie das Düngerschar 8 genau oder zumindest annähernd nebeneinander angeordnet sind, wirken sich Höhenänderungen in der Geländekontur unmittelbar auf die Höhenführung des Düngerschars 8 über das Tiefenführungsmittel aus. Wenn die Bodenkontur ansteigt, verlagert das Tiefenführungsmittel seine Höhenlage nach oben und nimmt dabei über eine mechanische Koppelung zwangsläufig das Düngerschar 8 nach oben mit. Genauso bewegt sich das Tiefenführungsmittel zusammen mit dem Düngerschar 8 nach unten, wenn sich der Boden absenkt. Durch die gleichzeitige Bewegung des Tiefenführungsmittels und des Düngerschars 8 an der Bodenkontur entlang wird der Dünger immer in einer zumindest annähernd gleich bleibenden Tiefe zur Bodenoberfläche abgelegt. Erhebliche Schwankungen in der Höhenablage des Düngers werden dadurch vermieden.

Im Ausführungsbeispiel ist das Rad 14 mit Speichen versehen. Das Rad 14 kann natürlich auch als ein geschlossener Radkörper ausgebildet sein.

Das Rad 14 verfügt über eine Bodenaufstandsfläche 18, mit der sich das Rad 14 auf dem Boden abstützt und mit der das Rad 14 der Bodenkontur folgt. Ein Teil des Außenumfanges des Rades 14 wird aber auch durch einen Ring 16 gebildet, der in radialer Richtung über die Bodenaufstandsfläche 18 hervorsteht. Der Ring 16 dient dem Zweck, in den Boden einzudringen. Der Ring 16 soll die Saatrille mit vorformen und den Boden im Bereich der Düngerablage wieder verdichten. Auf diese Weise wird das Rad 14 als Tiefenführungsmittel an der Ausbildung, Formung und Verdichtung der Saatrille beteiligt.

Im Ausführungsbeispiel befindet sich ein Rad 14 als Tiefenführungsmittel auf beiden Seiten des Düngerschars 8.

Bei der Vorfahrt der Sämaschine 2 dreht sich das Rad 14 um die Drehachse 20 in Rotationsrichtung R. Da das Rad 14 selbst nicht aktiv angetrieben ist, sich aber gleichwohl auf der Bodenfläche abrollen soll, um das Bodenmaterial im Bereich der Saatrille nicht zu verschmieren, ist es vorteilhaft, wenn sich auf den Streichflächen 22 des Ringes 16 Vorsprünge 24 befinden. Die Vorsprünge 24 bilden eine Art Keile, die sich mit dem Bodenmaterial verzahnen und über die in Arbeitsrichtung A weisenden Flächen beim Rollen über den Boden einen Druck aufbauen, über den das Rad 14 in eine drehende Bewegung versetzt wird. Die Vorsprünge 24 können in der Seitenansicht eine Dreiecks-, Trapez-, Rippen- oder sonstige Form aufweisen, über die zum Boden hin bei der Vorwärtsbewegung der Sämaschine 2 über den Boden ein flächiger Druck auf das Rad 14 aufgebaut werden kann.

Die Vorsprünge 24 haben auch eine vorteilhafte Wirkung auf die Ausbildung der Saatrille. Indem die Vorsprünge 24 quer zur Arbeitsrichtung A die seitlichen Flanken der Saatrille durchbrechen, bilden die Vorsprünge 24 Strukturen im Flankenbereich der Saatrille aus, in die die Wurzeln der ausgesäten Pflanzen gut hineinwachsen und von dort aus die seitlichen Flanken der Saatrille durchbrechen können. Die schnelle Verwurzelung und der Aufwuchs der Aussaat wird auf diese Weise durch die Vorsprünge 24 gefördert.

Das Düngerschar 8 ist Ausführungsbeispiel an einem Schwenkarm 30 gehalten, dessen Schwenkbewegung nach unten hin durch den Anschlag 26 begrenzt ist. Auch nach oben hin wird die Schwenkbewegung begrenzt, und zwar durch die Drehachse des Düngerschars 8. Das Düngerschar 8 ist durch einen Hydraulikzylinder schwenkbeweglich am Rahmen 4 gehalten, mit dem das Düngerschar 8 gegen den Rahmen 4 in den Boden gedrückt gehalten werden kann. Der Hydraulikzylinder ist ein Beispiel für einen Energiespeicher 28, der das Düngerschar 8 in den Boden drückt. Der Hydraulikzylinder als Energiespeicher 28 kann aktiv geregelt sein, indem Hydraulikflüssigkeit von einer Verstellvorrichtung gesteuert in den Hydraulikzylinder zu- oder abgeführt wird. Es ist aber auch möglich, den Hydraulikzylinder passiv gegen einen Druckspeicher arbeiten zu lassen, der je nach Auslegung Ausweichbewegungen des Düngerschars 8 gegen Hindernisse im Boden über den Hydraulikzylinder zulässt. Auch kann die Vorspannung des Energiespeichers 28 im Arbeitsverlauf der Sämaschine 2 variieren, um den Anpressdruck, mit dem das Düngerschar 8 auf den Boden gedrückt wird, an unterschiedliche Bodenverhältnisse anzupassen.

Im Ausführungsbeispiel ist auch das Säschar 6 schwenkbeweglich mit dem Rahmen 4 verbunden. Im Ausführungsbeispiel ist das Säschar 6 über Parallelogrammlenker 32 mit dem Rahmen verbunden. Um auch das Säschar 6 auf den Boden zu drücken, ist hier ein Energiespeicher 28 vorgesehen, der im Ausführungsbeispiel als Hydraulikzylinder ausgebildet ist. Für diesen Hydraulikzylinder gelten die vorstehenden Ausführungen zum Hydraulikzylinder, der das Düngerschar 8 auf den Boden gedrückt hält, entsprechend.

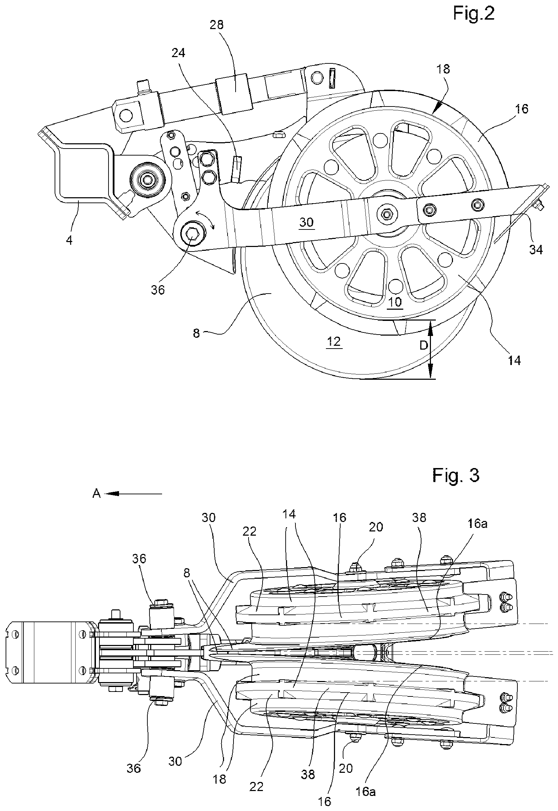

In Fig. 2 ist das Düngerschar 8 in einer vergrößerten Ansicht gezeigt. In dieser Ansicht befindet sich der Schwenkarm 30 in einer maximal nach oben geschwenkten Schwenklage. Selbst in dieser Schwenklage befindet sich mehr als die Hälfte der Hüllfläche 10 im Bereich der Hüllfläche 12 des Düngerschars 8. Am Ende des Schwenkarms 30 befindet sich ein Abstreifer 34, mit dem an den Bodenaufstandsflächen 18 sowie an den Flächen des Ringes 16 anhaftendes Bodenmaterial bei der Rotationsbewegung des Rades 14 abgestreift wird. In diesem Ausführungsbeispiel befinden sich auf den Flanken des Ringes 16 keine Vorsprünge 24. Im Rad 14 sind außerdem keine Speichen ausgebildet, sondern es ist in der Fläche geschlossen.

Aus der Fig. 2 ist erkennbar, dass der Schwenkarm 30 bei einer Verschwenkung um die Drehachse 36 den Abstand verändert, den die Bodenaufstandsfläche 18 des Rades 14 zum tiefsten Punkt der Scharscheibe des Düngerschars 8 aufweist. Der Abstand zwischen der Bodenaufstandsfläche 18 und dem tiefsten Punkt der Scharscheibe des Düngerschars 8 ist in Fig. 2 als Abstand D eingezeichnet. Der Abstand D bedeutet hier die Tiefe, bis zu der ein Dünger mit dem Düngerschar 8 im Boden abgelegt wird. Das Tiefenmaß D kann sich im Verlauf von Schwenkbewegungen des Schwenkarms 30 im Rahmen der Anschläge 24 verändern. Wenn allerdings der Schwenkarm 30 auf die Anschläge 24 trifft, arbeiten die Räder 14 gegen den Energiespeicher 28 und lösen dabei je nach Druckbeaufschlagung des Energiespeichers 28 eine Bewegung des Düngerschars 8 gegenüber dem Rahmen 4 aus, oder das Düngerschar 8 wird vom Druck des Energiespeichers tiefer in den Boden gedrückt.

Die Fig. 3 zeigt das Düngerschar 8 aus einer Perspektive von unten. In dieser Ansicht ist gut erkennbar, wie neben den Bodenaufstandsflächen 18 an den Rädern 14 zusätzliche Ringe 16 ausgebildet sind, die über die Bodenaufstandsflächen 18 in radialer Richtung hervorstehen. Auch die Doppelscheiben des Düngerschars 8 sind gut erkennbar. Die beiden Räder 14 sind jeweils von den Schwenkarmen 30 in einer zur Waagerechten schräg gestellten Lage gehalten, so dass sie im Bodenbereich einander zugewandt sind und sich nach oben hin V-förmig öffnen. Zudem ist eine Pfeilung der Doppelscheiben des Düngerschars 8 und der Räder 14 in Arbeitsrichtung A erkennbar. Die Schrägstellung der Räder 14 resultiert daraus, dass sowohl die Drehachsen 20 zur Waagerechten als auch die Drehachsen 36 zur Querrichtung zur Arbeitsrichtung A um einen Winkel schräg angestellt sind. Daraus ergibt sich die Pfeilung der Räder 14 in Arbeitsrichtung A, wobei die Räder 14 mit ihren Ringen 16 außerdem V-förmig in den Boden einschneiden.

In der in Fig. 3 gezeigten Ansicht ist erkennbar, dass die Querschnittsform der Ringe 16 asymmetrisch ausgestaltet ist. Während die dem Düngerschar 8 zugewandten Innenflanken der Ringe 16 eine annähernd senkrecht ausgerichtete Fläche aufweisen, ist die nach außen weisende Flanke der Ringe 16, die die Streichfläche 22 ausbildet, schräg zur Senkrechten verlaufend ausgebildet. Über die Streichflächen 22 kann Bodenmaterial, auf das die Ringe 16 auftreffen, zur Seite abgefördert werden.

Die Ringe 16 weisen außerdem umfangseitig eine nach außen weisende Ringfläche 38 auf, mit denen ein flächiger Druck auf das darunter befindliche Bodenmaterial ausgeübt werden kann. Die Ringflächen 38 dienen dem Zweck, das Bodenmaterial seitlich zum Düngerschar 8 beim Überrollen rückzuverdichten. Außerdem werden die Flanken der Saatrille, die von den Ringen 16 vorgeformt wird, von den Streichflächen 22 ausgeformt und verdichtet. Die Ränder der Saatrille, die von den beiden Ringen 16 vorgeformt wird, sind durch gestrichelte Linien angedeutet.

Zwischen den Kanten der Saatrille, die durch die gestrichelten Linien angedeutet sind, sind die Kanten der Düngerille in strichpunktierten Linien eingezeichnet, in die das Düngerschar 8 den Dünger ablegt. In der Ansicht von unten ist erkennbar, dass die Räder 14 nicht nur über die größeren Ringe 16 verfügen, sondern noch über zusätzliche kleinere Ringe 16a, die auf der den Doppelscheiben des Düngerschars 8 zugewandten Seite der Räder 14 ausgebildet sind. Diese zusätzlichen Ringe 16a dienen dem Zweck, Bodenmaterial über den in den Boden eingebrachten Dünger zu schieben und dieses Bodenmaterial so zu verfestigen, dass darauf gut das nachfolgende Saatgut abgelegt werden kann.

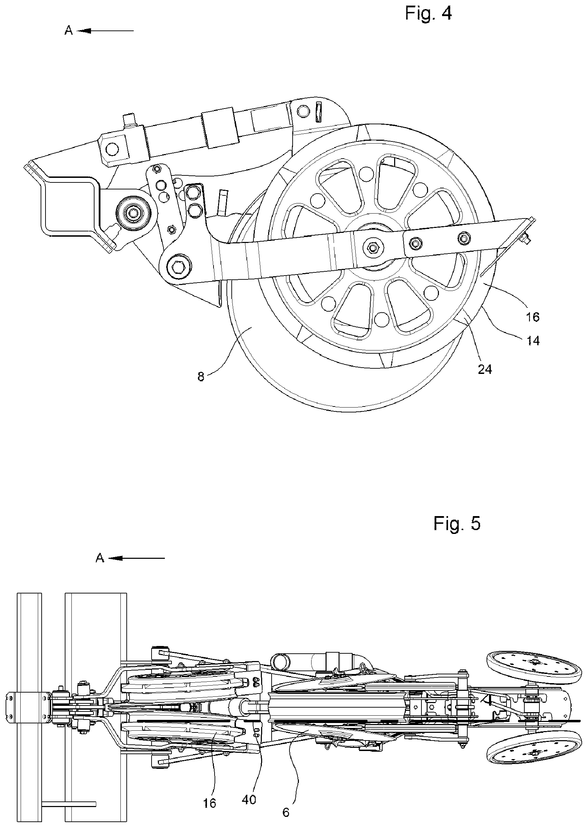

In der Fig. 4 ist das in Fig. 2 gezeigte Düngerschar 8 mit einem Rad 14 gezeigt, das im Flankenbereich Speichen aufweist und bei dem im Bereich des Rings 16 Vorsprünge 24 ausgebildet sind.

In Fig. 5 ist eine Ansicht von unten auf eine Kombination von einem Düngerschar 8 mit einem Säschar 6 4- gezeigt. In dieser Ansicht ist erkennbar, dass die Innenflanken der Ringe 16 an den Rädern 14 im Bereich der am tiefsten in den Boden hineinreichenden Kanten in einer Linie 40 angeordnet sind zu den Kanten der Scheiben des Säschars 6, die am tiefsten in den Boden hineinreichen. Die Linie 40 verläuft parallel zur Arbeitsrichtung A der Sämaschine 2. Die Linie 40 bezeichnet im Ausführungsbeispiel auch die Kante der Saatrille, in die das Säschar 6 das Saatgut ablegt. In der Ansicht in Fig. 5 ist außerdem gut erkennbar, dass sich die Anstellwinkel der Doppelscheiben der Düngerschare 8 und der Säschar 6 in einer Richtung quer zur Arbeitsrichtung A wie auch zur Senkrechten entsprechen. Das gilt auch für die Anstellwinkel, in denen die Räder 14 im Vergleich zu den Doppelscheiben des Säschars 6 angestellt sind.

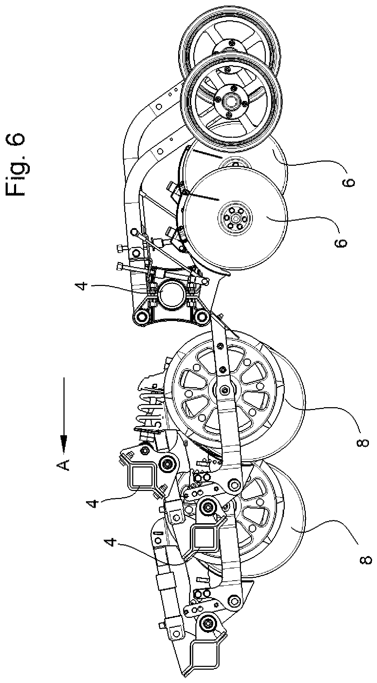

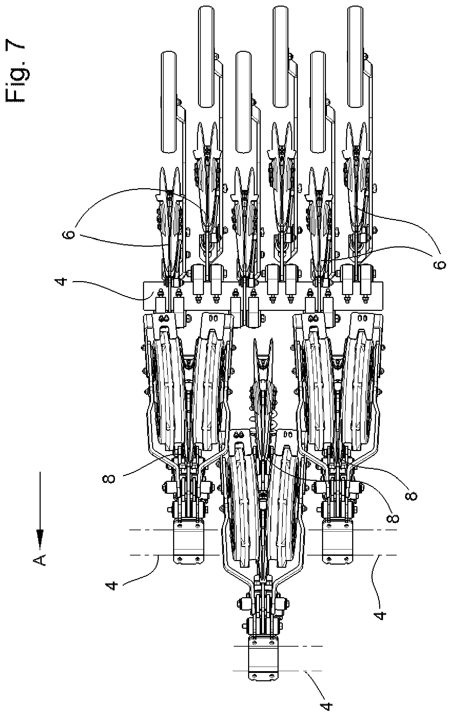

Die Figuren 6 und 7 zeigen Kombinationen von Düngerscharen 8 und Säscharen 6, die an einem Rahmen 4 angeordnet sein können. In diesem Ausführungsbeispiel sind einem Düngerschar 8 zwei Säscharen 6 zugeordnet, die mit einem seitlichen Versatz zur Arbeitsrichtung A das Saatgut auf dem Boden ablegen. Während ein Düngerschar 8 eine große Saatrille ausbildet, formen die diesem Düngerschar 8 zugeordneten beiden nachgeordneten Säscharen 6 jeweils noch eine eigene Saatrille aus, in die sie dann das Saatgut ablegen. Dadurch wird das Saatgut nicht genau auf den Dünger gelegt, den das Düngerschar 8 in den Boden einbringt. Insbesondere aus der Fig. 7, die die Düngerschare 8 und die Säschare 6 aus einer Ansicht von unten zeigt, ist erkennbar, dass sowohl die Düngerschare 8 als auch die Säschare 6 zueinander in Längsrichtung zur Arbeitsrichtung A versetzt zueinander angeordnet sein können. Das von den Säscharen abgelegte Saatgut kann seinerseits in Arbeitsrichtung A versetzt zueinander abgelegt werden, so dass sich eine Art Zick-Zack-Muster in der Saatgutausbringung einstellt.

Es versteht sich von selbst, dass an einer Sämaschine 2 mehrere Düngerschare 8 und mehrere Säschare 6 in Querrichtung nebeneinander und/oder auch in Längsrichtung versetzt zueinander angeordnet sein können. So ist es gegenwärtig möglich, bei einem Arbeitsgang einer Sämaschine 2 bis zu 48 Saatrillen mit entsprechend nebeneinander und/oder versetzt zueinander angeordneten Dünger- und Säscharen in den Boden zu reißen und darin das Saatgut abzulegen.

## Patentansprüche

1. Sämaschine (2) mit einem Rahmen (4), mit dem mindestens ein scheibenförmiges Säschar (6) und ein dem Säschar (6) in einer Arbeitsrichtung vorgeordnetes, eine Hüllfläche (12) aufweisendes, scheibenförmiges Düngerschar (8) verbunden sind, wobei dem Säschar (6) und dem Düngerschar (8) jeweils ein Tiefenführungsmittel zugeordnet sind,
wobei es sich bei dem oder den dem Düngerschar (8) zugeordneten Tiefenführungsmitteln um eines oder mehrere Räder (14) handelt, wobei zumindest an einer Seite des Düngerschars (8) ein Tiefenführungsmittel seitlich so neben dem Düngerschar (8) angeordnet ist, dass aus einer Richtung quer zur Arbeitsrichtung (A) gesehen zumindest dessen hälftige Hüllfläche (10) die Hüllfläche (12) des Düngerschars (8) überschneidet,
**dadurch gekennzeichnet, dass**
das Tiefenführungsmittel ein in den Boden eindringendes Reihenvorformungs- und Rückverfestigungsmittel aufweist, das quer zur Arbeitsrichtung (A) gesehen zur Düngerschar (8) so versetzt angeordnet ist, dass in dessen Spur das nachfolgende Säschar (6) den Boden einschneidet und die Särille formt.

2. Sämaschine (2) nach Anspruch 1, **dadurch gekennzeichnet, dass** an beiden Seiten des Düngerschars (8) ein Tiefenführungsmittel angeordnet ist.

3. Sämaschine nach Anspruch 1 oder 2, **dadurch gekennzeichnet, dass** es sich bei den Rädern (14) um ein Speichenrad oder Vollrad handelt.

4. Sämaschine (2) nach einem der vorherigen Ansprüche, **dadurch gekennzeichnet, dass** am Außenumfang der Räder (14) jeweils ein umlaufender Ring (16) als Reihenvorformungs- und Rückverfestigungsmittel ausgebildet ist, der nach außen hin gegenüber einer zum Ring (16) benachbarten umlaufenden Bodenaufstandsfläche (18) des jeweiligen Rades (14) vorsteht.

5. Sämaschine (2) nach einem der vorherigen Ansprüche, **dadurch gekennzeichnet, dass** die Drehachsen (20) der Räder (14) schräg zur Arbeitsrichtung (A) angestellt sind, so dass sich in Arbeitsrichtung (A) eine Pfeilung der Räder (14) ergibt.

6. Sämaschine (2) nach Anspruch 5, **dadurch gekennzeichnet, dass** der Anstellwinkel der Räder (14) im Verhältnis zur Arbeitsrichtung (A) dem Anstellwinkel entspricht, in dem die Scheiben des Säschars (6) im Verhältnis zur Arbeitsrichtung (A) angestellt sind.

7. Sämaschine (2) nach Anspruch 5 oder 6, **dadurch gekennzeichnet, dass** die Drehachsen der Räder (14) schräg zur vertikalen Richtung angestellt sind, wobei der Anstellwinkel der Räder (14) in vertikaler Richtung bevorzugt dem Anstellwinkel entspricht, in dem die Scheiben des Säschars (6) im Verhältnis zur vertikalen Richtung angestellt sind.

8. Sämaschine (2) nach einem der vorhergehenden Ansprüche, **dadurch gekennzeichnet, dass** das oder die dem Düngerschar (8) zugeordneten Tiefenführungsmittel im Bodenkontaktbereich auf einer oder beiden Flankenseiten eine zur Vorfahrtrichtung schräg angestellte Streichfläche (22) aufweisen.

9. Sämaschine (2) nach einem der vorhergehenden Ansprüche, **dadurch gekennzeichnet, dass** die dem Düngerschar (8) zugeordneten Tiefenführungsmittel im Bodenkontaktbereich Vorsprünge (24) aufweisen, die über die umgebenden Oberflächen hervorstehen.

10. Sämaschine (2) nach einem der vorhergehenden Ansprüche 4 bis 9, **dadurch gekennzeichnet, dass** die Tiefenführungsmittel eine asymmetrische, die Furche des Saatbetts formende Querschnittsform aufweisen.

11. Sämaschine (2) nach einem der vorhergehenden Ansprüche, **dadurch gekennzeichnet, dass** zumindest eine in der Arbeitsstellung am tiefsten in den Boden hineinreichende Kante der dem Düngerschar (8) zugewandten Flanken der Tiefenführungsmittel und zumindest eine der am tiefsten in den Boden hinein reichenden Kanten der Scheiben des Säschars (6) in einer Linie angeordnet sind, die zur Arbeitsrichtung (A) parallel verläuft.

12. Sämaschine (2) nach einem der vorhergehenden Ansprüche, **dadurch gekennzeichnet, dass** die Tiefenführungsmittel ganz oder teilweise aus einem polymeren oder elastomeren Werkstoff hergestellt sind.

13. Sämaschine (2) nach einem der vorhergehenden Ansprüche, **dadurch gekennzeichnet, dass** die Tiefenführungsmittel mit dem Düngerschar (8) allein oder gemeinsam gegenüber dem Rahmen (4) schwenkbeweglich gelagert sind.

14. Sämaschine (2) nach Anspruch 13, **dadurch gekennzeichnet, dass** die Schwenkbewegungen der Tiefenführungsmittel nach oben und/oder unten hin durch einen mechanischen Anschlag (26) beschränkt sind.

15. Sämaschine (2) nach Anspruch 14, **dadurch gekennzeichnet, dass** der mechanische Anschlag (26) höhenverstellbar ausgebildet ist.

16. Sämaschine (2) nach einem der vorhergehenden Ansprüche, **dadurch gekennzeichnet, dass** die Tiefenführungsmittel in der Arbeitsstellung über einen Energiespeicher (28) auf dem Boden gehalten sind.

17. Sämaschine (2) nach Anspruch 16, **dadurch gekennzeichnet, dass** die aus dem Energiespeicher (28) auf die Tiefenführungsmittel einwirkenden Kräfte mittels einer Einstellvorrichtung verstellbar sind.

18. Sämaschine (2) nach Anspruch 17, **dadurch gekennzeichnet, dass** die Einstellvorrichtung eine Auswerteelektronik aufweist, die mit einer Sensorik verbunden ist, die aktuelle Höhenlagen des Düngerschars (8) und/oder auf das Düngerschar (8) einwirkende Kräfte misst, mittels einer geeigneten Software aus den übermittelten Sensordaten Stellgrößen zur Verstellung der Einstellvorrichtung ermittelt, und die mit Aktoren der Einstellvorrichtung verbunden ist, an die die Auswerteelektronik die ermittelten Stellgrößen als Regelgrößen übermittelt.

19. Sämaschine (2) nach einem der vorhergehenden Ansprüche 16 bis 18, **dadurch gekennzeichnet, dass** das mit einem Tiefenführungsmittel verbundene Säschar (6) in der Arbeitsstellung über einen Energiespeicher (28) auf dem Boden gehalten ist, und der das Säschar (6) auf dem Boden haltende Energiespeicher (28) funktionsmäßig verbunden ist mit einem Energiespeicher (28), der das Düngerschar (8) auf dem Boden hält.

20. Sämaschine (2) nach Anspruch 19, **dadurch gekennzeichnet, dass** die Energiespeicher (28) für das Düngerschar (8) und das Säschar (6) gemeinsam verstellbar ausgebildet sind.

21. Sämaschine (2) nach einem der vorhergehenden Ansprüche 16 bis 20, **dadurch gekennzeichnet, dass** ein oder mehrere Düngerschare (8) und/oder Säschare (6) vom jeweiligen Energiespeicher (28) teilflächenspezifisch aushebbar ausgebildet sind.

22. Sämaschine (2) nach einem der vorhergehenden Ansprüche 16 bis 21, **dadurch gekennzeichnet, dass** in der Transportstellung der Sämaschine (2) ein oder mehrere Düngerschare (8) und/oder Säschare (6) von den zugehörigen Energiespeichern (28) eingezogen sind.

## Claims

1. A seed drill (2) having a frame (4), to which at least one disc-shaped seeding coulter (6) and a disc-shaped fertiliser coulter (8) arranged upstream of the seeding coulter (6) in a working direction are connected, wherein the seeding coulter (6) and the fertiliser coulter (8) are each assigned a depth control means, wherein the depth control means assigned to the fertiliser coulter (8) is or are one or more wheels (14), wherein at least on a side of the fertiliser coulter (8) a depth control means is arranged laterally next to the fertiliser coulter (8) so that seen from a direction transversely to the working direction (A) at least half of the enveloping surface (10) of the same overlaps the enveloping surface (12) of the fertiliser coulter (8), **characterized in that** the depth control means comprises a row pre-forming and re-compacting means entering the ground, which, seen transversely to the working direction (A), is arranged relative to the fertiliser coulter (8) so that the track of the same the following seeding coulter (6) cuts into the ground and forms the seed furrow.

2. The seed drill (2) according to Claim 1,
**characterized**
**in that** on both sides of the fertiliser coulter (8) a depth control means is arranged.

3. The seed drill (2) according to Claim 1 or 2,
**characterized**
**in that** the wheels (14) are a spoke wheel or solid wheel.

4. The seed drill (2) according to any one of the preceding claims,
**characterized**
**in that** on the outer circumference of the wheels (14) a circumferential ring (16) each as row pre-forming and re-compaction means is formed, which projects towards the outside relative to a circumferential ground contact area (18) of the respective wheel (14) that is adjacent to the ring (16).

5. The seed drill (2) according to any one of the preceding claims,
**characterized**
**in that** the axes of rotation (20) of the wheels (14) are set obliquely to the working direction (A) so that in the working direction (A) an arrow form of the wheels (14) materialises.

6. The seed drill (2) according to Claim 5,
**characterized**
**in that** the setting angle of the wheels (14) relative to the working direction (A) corresponds to the setting angle at which the double discs of the seeding coulter (6) are set relative to the working direction (A).

7. The seed drill (2) according to Claim 5 or 6,
**characterized**
**in that** the axes of rotation of the wheels (14) are set obliquely to the vertical direction, wherein the setting angle of the wheels (14) in the vertical direction preferably corresponds to the setting angle at which the discs of the seeding coulter (6) are set relative to the vertical direction.

8. The seed drill (2) according to any one of the preceding claims, **characterized**
**in that** the good means assigned to the fertiliser coulter (8) has or have a wiping surface (22) in the ground contact region on one or both flank sides that is set obliquely to the forward travelling direction.

9. The seed drill (2) according to any one of the preceding claims, **characterized**
**in that** the depth control means assigned to the fertiliser coulter (8) have projections (24) in the ground contact region which project over the surrounding surfaces.

10. The seed drill (2) according to any one of the preceding Claims 4 to 9, **characterized**
**in that** the depth control means have an asymmetrical cross-sectional shape.

11. The seed drill (2) according to any one of the preceding claims, **characterized**
**in that** at least one edge projecting deepest into the ground in the working position of the flanks of the depth control means facing the fertiliser coulter (8) and at least one of the edges of the seeding coulter (6) reaching deepest into the ground are arranged in a line which runs parallel to the working direction (A).

12. The seed drill (2) according to any one of the preceding claims, **characterized**
**in that** the depth control means are wholly or partially produced from a polymer or elastomer material.

13. The seed drill (2) according to any one of the preceding claims, **characterized**
**in that** the depth control means with the fertiliser coulter (8) are alone or jointly pivot-moveably mounted relative to the frame (4).

14. The seed drill (2) according to Claim 13,
**characterized**
**in that** the pivot movements of the depth control means are restricted upwards and/or downwards by a mechanical stop (26).

15. The seed drill (2) according to Claim 14,
**characterized**
**in that** the mechanical stop (26) is designed so as to be adjustable in height.

16. The seed drill (2) according to any one of the preceding claims, **characterized**
**in that** the depth control means in the working position is held on the ground via an energy store (28).

17. The seed drill (2) according to any one of the preceding claims, **characterized**
**in that** the forces from the energy store (28) acting on the depth control means are adjustable by means of an adjusting device.

18. The seed drill (2) according to Claim 17,
**characterized**
**in that** the adjusting device comprises an evaluation electronic system which is connected to a sensor system which measures current height positions of the fertiliser coulter (8) and/or forces acting on the fertiliser coulter (8), determines by means of a suitable software correcting variables from the transmitted sensor data for adjusting the adjusting device, and which are connected to actuators of the adjusting device to which the evaluation electronic system transmits the determined actuating quantities as controlling quantities.

19. The seed drill (2) according to any one of the preceding Claims 16 to 18, **characterized**
**in that** the seeding coulter (6) connected to a depth control means is held in the working position on the ground via an energy store (28), and the energy store (28) holding the seeding coulter (6) on the ground is functionally connected to an energy store (28) which holds the fertiliser coulter (8) on the ground.

20. The seed drill (2) according to Claim 19,
**characterized**
**in that** the energy store (28) for the fertiliser coulter (8) and the seeding coulter (6) are built jointly adjustable.

21. The seed drill (2) according to any one of the preceding Claims 16 to 20, **characterized**
**in that** one or more fertiliser coulters (8) and/or seeding coulters (6) are built site-specifically liftable by the respective energy store (28).

22. The seed drill (2) according to any one of the preceding Claims 16 to 21, **characterized**
**in that** in the transport position of the seed drill (2) one or more fertiliser coulters (8) and/or seeding coulters (6) are retracted by the associated energy stores (28).

## Revendications

1. Semoir (2) pourvu d'un cadre (4), avec lequel sont assemblés au moins un soc de semoir (6) en forme de disque et un soc fertiliseur (8) en forme de disque, monté en amont du soc de semoir (6) dans une direction de travail, comportant une surface d'enveloppe (12), au soc de semoir (6) et au soc fertiliseur (8) étant chaque fois associé un moyen de guidage en profondeur, le ou les moyens de guidage en profondeur associé(s) au soc fertiliseur (8) étant une ou plusieurs roues (14), au moins sur une face du soc fertiliseur (8), un moyen de guidage en profondeur étant placé latéralement à côté du soc fertiliseur (8), de telle sorte que considérée à partir d'une direction à la transversale de la direction de travail (A), au moins sa demi-surface d'enveloppe (10) se recoupe avec la surface d'enveloppe (12) du soc fertiliseur (8), **caractérisé en ce que**
le moyen de guidage en profondeur comporte un moyen de préformation de rangées et de reconsolidation pénétrant dans le sol, qui considéré à la transversale de la direction de travail (A) est placé par rapport au soc fertiliseur (8) avec un décalage tel, que dans sa trace, le soc de semoir (6) suivant entaille le sol et forme le sillon de semis.

2. Semoir (2) selon la revendication 1, **caractérisé en ce que** sur les deux faces du soc fertiliseur (8) est placé un moyen de guidage en profondeur.

3. Semoir selon la revendication 1 ou 2, **caractérisé en ce qu'**en ce qui concerne les roues (14), il s'agit d'une roue à rayons ou d'une roue pleine.

4. Semoir (2) selon l'une quelconque des revendications précédentes, **caractérisé en ce que** sur la circonférence extérieure des roues (14) est conçue chaque fois une bague (16) périphérique, faisant office de moyen de préformation de rangées et de reconsolidation, qui déborde vers l'extérieur par rapport à une surface de contact avec le sol (18) périphérique de la roue (14) en question, qui est voisine de la bague (16).

5. Semoir (2) selon l'une quelconque des revendications précédentes, **caractérisé en ce que** les axes de rotation (20) des roues (14) sont engagés en oblique par rapport à la direction de travail (A), de sorte à donner lieu dans la direction de travail (A) à un angle de flèche des roues (14).

6. Semoir (2) selon la revendication 5, **caractérisé en ce que** l'angle d'attaque des roues (14) en rapport à la direction de travail (A) correspond à l'angle d'attaque selon lequel les disques du soc de semoir (6) sont engagés par rapport à la direction de travail (A).

7. Semoir (2) selon la revendication 5 ou 6, **caractérisé en ce que** les axes de rotation des roues (14) sont engagés en oblique par rapport à la direction verticale, l'angle d'attaque des roues (14) en direction verticale correspondant de préférence à l'angle d'attaque selon lequel les disques du soc de semoir (6) sont engagés par rapport à la direction verticale.

8. Semoir (2) selon l'une quelconque des revendications précédentes, **caractérisé en ce que** le ou les moyen(s) de guidage en profondeur associé(s) au soc fertiliseur (8) comportent dans la zone de contact avec le sol, sur l'un ou les deux côté(s) de flanc une surface d'effleurement (22) engagée en oblique par rapport à la direction de déplacement en avant.

9. Semoir (2) selon l'une quelconque des revendications précédentes, **caractérisé en ce que** les moyens de guidage en profondeur associés au soc fertiliseur (8) comportent dans la zone de contact avec le sol des saillies (24) qui débordent au-delà des surfaces environnantes.

10. Semoir (2) selon l'une quelconque des revendications précédentes 4 à 9, **caractérisé en ce que** les moyens de guidage en profondeur présentent une forme de section transversale asymétrique, formant la tranchée du lit de semence.

11. Semoir (2) selon l'une quelconque des revendications précédentes, **caractérisé en ce qu'**au moins une arête pénétrant le plus profondément dans le sol en position de travail des flancs des moyens de guidage en profondeur qui font face au soc fertiliseur (8) et au moins l'une des arêtes pénétrant le plus profondément dans le sol des disques du soc de semoir (6) sont placées sur une ligne qui s'étend à la parallèle de la direction de travail (A).

12. Semoir (2) selon l'une quelconque des revendications précédentes, **caractérisé en ce que** les moyens de guidage en profondeur sont fabriqués entièrement ou partiellement en une matière polymère ou élastomère.

13. Semoir (2) selon l'une quelconque des revendications précédentes, **caractérisé en ce que** les moyens de guidage en profondeur avec le soc fertiliseur (8) sont logés de manière pivotante, seuls ou conjointement par rapport au cadre (4).

14. Semoir (2) selon la revendication 13, **caractérisé en ce que** les mouvements pivotants des moyens de guidage en profondeur sont délimités vers le haut et/ou vers le bas par une butée (26) mécanique.

15. Semoir (2) selon la revendication 14, **caractérisé en ce que** la butée (26) mécanique est conçue de sorte à être réglable en hauteur.

16. Semoir (2) selon l'une quelconque des revendications précédentes, **caractérisé en ce que**, dans la position de travail, les moyens de guidage en profondeur sont maintenus au sol par l'intermédiaire d'un accumulateur d'énergie (28).

17. Semoir (2) selon la revendication 16, **caractérisé en ce que** les forces agissant à partir de l'accumulateur d'énergie (28) sur les moyens de guidage en profondeur sont ajustables à l'aide d'un dispositif de réglage.

18. Semoir (2) selon la revendication 17, **caractérisé en ce que** le dispositif de réglage comporte un système électronique d'évaluation, qui est connecté avec des capteurs, mesure la position en hauteur actuelle du soc fertiliseur (8) et/ou mesure les forces agissant sur le soc fertiliseur (8), à l'aide d'un logiciel adapté, détermine à partir des données transmises par les capteurs des grandeurs de réglage pour l'ajustage du dispositif de réglage, et qui est relié avec des actionneurs du dispositif de réglage, auxquels le système électronique d'évaluation transmet les grandeurs de réglage en tant que grandeurs de régulation.

19. Semoir (2) selon l'une quelconque des revendications précédentes 16 à 18, **caractérisé en ce qu'**en position de travail, le soc de semoir (6) relié avec un moyen de guidage en profondeur est maintenu au sol par l'intermédiaire d'un accumulateur d'énergie (28) et **en ce que** l'accumulateur d'énergie (28) maintenant le soc de semoir (6) au sol (28) est relié de manière fonctionnelle avec un accumulateur d'énergie (28), qui maintient le soc fertiliseur (8) au sol.

20. Semoir (2) selon la revendication 19, **caractérisé en ce que** les accumulateurs d'énergie (28) pour le soc fertiliseur (8) et le soc de semoir (6) sont conçus de sorte à être ajustables conjointement.

21. Semoir (2) selon l'une quelconque des revendications précédentes 16 à 20, **caractérisé en ce qu'**un ou plusieurs socs fertiliseurs (8) et/ou socs de semoir (6) sont conçus de sorte à pouvoir être levés par l'accumulateur d'énergie (28) concerné, de manière spécifique à des sites partielles.

22. Semoir (2) selon l'une quelconque des revendications précédentes 16 à 21, **caractérisé en ce que** dans la position de transport du semoir (2), un ou plusieurs socs fertiliseurs (8) et ou socs de semoir (6) sont retirés vers l'intérieur par les accumulateurs d'énergie (28) correspondants.
